# EUROPEAN PATENT APPLICATION

(11) **EP 1 004 257 A1**
(43) Date of publication of application: **31.05.2000**
(21) Application number: 99309285.7
(22) Date of filing: 22.11.1999
(51) Int. Cl.: A47B 57/26, F16B 12/52

(54) **Improved shelving system**

(30) Priority: 27.11.1998 GB 9825895
(71) Applicant: Stellex Limited, Morpeth, Northumberland NE65 9YG (US)
(72) Inventor: Laurence, Evans James, Blyth, Northumberland NE24 4PY (GB)
(74) Representative: Vinsome, Rex Martin

(57) **Abstract**

A shelving system is disclosed having at least one generally planar shelf(11), support legs (10) for supporting said shelves, mounting brackets (13, 14) for each said support leg which are themselves made up of two components which together retain the comer of the shelf between them and also define an aperture equal to or slightly larger than the cross-sectional shape and dimensions of a the leg, and for each leg and mounting bracket a clamping means (20) to retain said leg within said aperture.

## Description

The present invention is apparatus for constructing a shelving assembly comprising one or more shelves removably supported upon support legs.

Various forms of shelving systems are currently available, which are intended to allow the constructing of structures in the form of one or more shelves upon support legs but such existing systems suffer from various disadvantages in practice. For example, the exercise of constructing a shelf assembly from its component parts may require the accurate positioning and supporting of the legs while the shelves are being attached to the legs. This may be a difficult activity for a single person to carry out. Furthermore, the attaching of each leg to the or each shelf may cause damage to the leg and may not readily be reversed. In addition, many existing such systems do not enable easy adjustment of shelf height, in particular by one person working unaided.

Preferred embodiments of the present invention seek to overcome the above disadvantages of the prior art.

According to the present invention, there is provided a furniture assembly comprising:
at least one generally planar shelf;
a t least one support leg for supporting the or each said shelf;
a respective mounting bracket for at least one junction of a said support leg with a said shelf, the or each said bracket having (i) two components which together are adapted to retain part of a said shelf between them and to define an aperture equal to or slightly larger than the cross-sectional shape and dimension of a said leg, and (ii) clamping means to retain said leg within said aperture.

The apparatus may be readily used for the construction of a shelving assembly of one or more shelves supported upon legs and may be designed for packing flat for delivery purposes.

The apparatus may comprise a single shelf adapted to form a table top but is of particular benefit when designed to be constructed to provide an assembly oftwo or more shelves spaced apart vertically. The shelf or shelves will usually be supported upon four legs but additional legs, not necessarily of the same design, may be provided for installation in intermediate positions down the length of the shelf or shelves or, in the case of a table, the latter may be supported upon three legs.

In a preferred embodiment, the or each said support leg is adapted to support the or each said shelf by a respective corner of the or each said shelf.

Each said bracket comprises two components which cooperate both to retain the adjacent corner between them and also to provide an aperture into which the adjacent leg may pass.

The or each said shelf preferably includes side walls extending perpendicular to the surface of the shelf, preferably downwardly perpendicular thereto in use.

The two bracket components may then be designed to be installed to engage the inner and outer faces respectively of the side walls. In any case, the two components of each mounting bracket are preferably designed to be secured together, for example bolted together, preferably progressively closely, so as to grip the shelf corner between them.

The two components of the mounting bracket also provide an aperture corresponding closely to the cross-sectional shape and dimension of one of the legs. While one of those components may itself provide such an aperture, it is particularly preferred that at least a part of the or each said aperture is defined by interengaging faces and/or edges of the two components of the corresponding mounting bracket.

The legs may be of square or circular cross-section, for example.

The two components of the mounting bracket preferably provide an aperture, preferably an elongate socket, of like cross-section between them.

Thus, when the two components of the mounting bracket have been assembled together upon the adjacent corner of the shelf, all that is subsequently required is to insert a support leg into the aperture or socket so provided and then to secure the leg in the required position, corresponding to the desired position of the shelf along the height ofthe leg, using the clamping means provided for that purpose.

The clamping means may advantageously take the form of a shaped member designed to engage the surface of the support leg from the side.

The shaped member may comprise a jaw, having a profile which in plan view matches a part of the profile of the support leg, for example one corner of a square-cross-sectioned leg or a part of the circumference of a leg of circular cross-section.

Movement of the clamping means into engagement with the leg may advantageously be effected by tightening a bolt, preferably a threaded bolt.

Subsequent fine setting of the position of the shelf corner upon the support leg, or subsequent changing of the height of the shelf or shelves, requires only a slackening and subsequent tightening of the clamping means.

While, in the simplest form of the apparatus of the present invention, the aperture which receives the adjacent support leg is directly defined by the opposed edges or faces of the two components of the mounting bracket, it is also possible to modify the shape and/or dimensions of the aperture by including a shaped insert within the aperture. By way of example, the bracket components may cooperate to form an aperture of square or rectangular cross-section but the shape of the aperture may be rendered circular or cylindrical by including an appropriately shaped insert between the components.

The invention will now be further described with reference to the accompanying drawings which illustrate, by way of example only, one preferred embodiment of the apparatus according to the present invention and wherein:-
Fig. 1 is a detailed exploded view, in perspective, of the components together forming one corner of the assembled apparatus;
Fig. 2 illustrates, in broken outline, a shelving assembly incorporating the apparatus of Fig. 1; and
Fig. 3 illustrates, in elevation and partly in cross-section, a modification of the apparatus of Figs. 1 and 2.

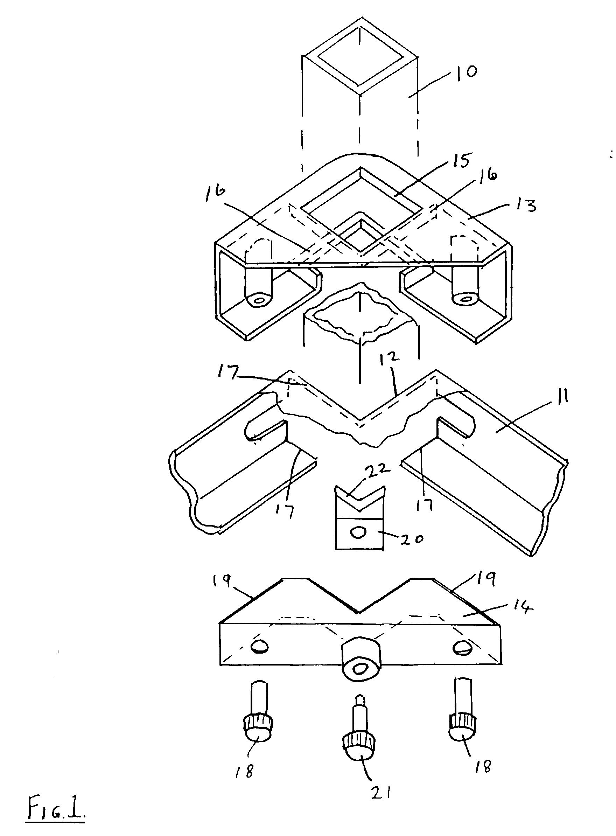

The apparatus illustrated in Fig. 1 includes a support leg 10 of square cross-section and a shelf 11 formed with a square cut-away corner 12 of a dimension slightly greater than that of the leg 10. The shelf is mounted upon the leg by means of a mounting bracket comprising a socket part 13 and an insert 14.

The socket part 13 of the mounting bracket has an aperture 15 of such a shape and dimensions as to receive the support leg 10 as a close sliding fit. Internal ridges 16 within the part 13 engage the edges 17 formed on the shelf and locate the shelf accurately upon the leg 10.

The bracket insert 14 is secured within the socket part 13 by means of bolts 18, with the outer leading edges 19 of the insert 14 abutting the adjacent inner faces of the shelf 11. Thus the bracket insert 14 does not make direct contact with the support leg 10. Inter-engagement of the bracket parts 13 and 14 secures the corner of the shelf within the mounting bracket.

A clamping jaw 20 carried upon a bolt 21, in turn mounted on the bracket insert 14, has a leading edge 22 shaped to match the adjacent corner of the leg 10. Thus tightening of the bolt 21 secures the mounting bracket and the shelf upon the support leg. Any adjustment of the height of the shelf 11 upon the leg 10 - or dismantling of the assembly of shelves and legs - merely requires the slackening of the bolt 21.

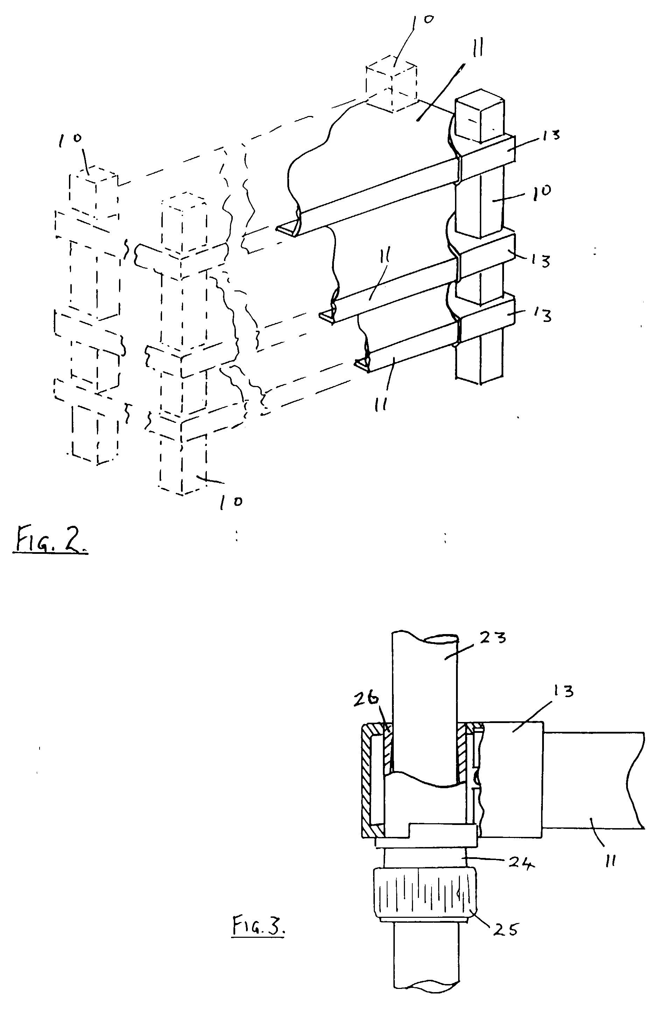

Fig. 2 illustrates an assembly ofthree shelves 11 upon support legs 10, each shelfbeing retained upon each leg by means of a mounting bracket such as that illustrated in Fig. 1.

An important advantage ofthe apparatus according to the present invention as illustrated in the accompanying drawings is that the various components by which each shelf is mounted upon a leg may be pre-assembled as a flat pack consisting of the shelf and the components for all of the legs, together with the legs themselves. Upon delivery of the pack to the site of use, it is only necessary to insert the legs into the pre-formed sockets and to tighten the clamping jaw bolts 21.

The modified form of the apparatus, illustrated in Fig. 3, includes the leg mounting bracket socket part 13, secured to the shelf 11 in the above-described manner. However a female tapered insert 26, of square external cross-section but having a tapered cylindrical socket, is secured tightly upon a cylindrical support leg 23 by inter-engagement with a male tapered insert 24, which terminates at its lower end in a hand-operated cam nut 25. The thus modified support leg is retained in position within the leg mounting bracket by tightening of the clamping jaw against the adjacent corner ofthe insert 26. Thus the only modification which is necessary to mount the shelves in the present invention upon support legs of other than square cross-section is the provision of appropriately shaped inserts such as the illustrated inserts 26 and 24.

The parts which together make up the apparatus according to the present invention may be formed from any materials suitable for the intended purpose. In general, it is preferred that the shelves and all of the other components, apart from the tapered inserts 24 and 26, be made of metal. The latter inserts are preferably formed in a plastics material. However the other components may also be formed in a plastics material if desired.

It will be appreciated by persons skilled in the art that the above embodiments have been described by way of example only, and not in any limitative sense, and that various alterations and modifications are possible without departure from the scope of the invention as defined by the appended claims.

## Claims

1. A furniture assembly comprising:
at least one generally planar shelf;
a t least one support leg for supporting the or each said shelf;
a respective mounting bracket for at least one junction of a said support leg with a said shelf, the or each said bracket having (i) two components which together are adapted to retain part of a said shelf between them and to define an aperture equal to or slightly larger than the cross-sectional shape and dimension of a said leg, and (ii) clamping means to retain said leg within said aperture.

2. An assembly according to claim 1, comprising a single shelf adapted to form a table top.

3. A shelving system according to claim 1, comprising two or more shelves spaced apart vertically.

4. An assembly according to any one of the preceding claims, wherein the or each said support leg is adapted to support the or each said shelf by a respective corner of the or each said shelf.

5. An assembly according to any one of the preceding claims, wherein the or each said shelf further comprises side walls extending perpendicular to the surface of the shelf, preferably downwardly perpendicular thereto in use.

6. An assembly according to any one of the preceding claims, wherein at least a part of the or each said aperture is defined by interengaging faces and/or edges of the two components of the corresponding mounting bracket.

7. An assembly according to any one of the preceding claims wherein, the or each said aperture is an elongate socket.

8. An assembly unit according to any one of the preceding claims, wherein at least one said clamping means is a shaped member adapted to engage the surface of the corresponding support leg from the side.

9. An assembly according to claim 8, wherein the or each said shaped member comprises a jaw, having a profile which in plan view at least partially matches the profile of the corresponding support leg.

10. An assembly according to any one of the preceding claims, wherein movement of the clamping means into engagement with the leg is effected by the tightening of a bolt.

11. An assembly according to any of the preceding claims wherein the shape and/or dimensions of the aperture are modified by the inclusion of a shaped insert within the aperture.
